# EUROPEAN PATENT SPECIFICATION

(11) **EP 1 792 753 B1**
(45) Date of publication and mention of the grant of the patent: **07.10.2009**
(21) Application number: 06024162.7
(22) Date of filing: 21.11.2006
(51) Int. Cl.: B60C 11/00, B60C 11/11

(54) **Off-road tire**
Geländereifen
Pneumatique tout-terrain

(30) Priority: 30.11.2005 JP 2005346445
(43) Date of publication of application: 06.06.2007
(73) Proprietor: Sumitomo Rubber Industries, Ltd., Kobe-shi, Hyogo-ken (JP)
(72) Inventor: Matsumura, Sadahiko c/o Sumitomo Rubber Industries, Ltd., Kobe-shi Hyogo-ken (JP)
(74) Representative: Manitz, Finsterwald & Partner GbR

(56) References cited:
- EP-A- 1 288 023
- US-A- 3 951 191
- US-A- 5 690 760
- US-A1- 2002 026 971
- US-B1- 6 363 984

## Description

The present invention relates to a tire for use in rough terrain, more particularly to a block-based tread pattern capable of improving the traction performance in various road conditions.

In the motocross races held on off-road circuits, generally, a circuit is provided with various road surface conditions so as to include: a hard terrain like solid dried tuff loam; a middle terrain like wet tuff loam; and a soft terrain e.g. wet clay loam, sandy soil, mud and the like. Thus, it is very important for the tire on the driving wheel of a motocross bike that the tier can generate a large tractional force on every terrain.

A tire having the features of the preamble of claim 1 is known from US 3,951,191.

It is an object of the present invention to provide an off-road tire, of which traction performance on various terrains is improved.

This object is achieved with an off-road tire having the features of claim 1.

Subclaims are directed to preferable embodiments.

The number of the repetition of the minimum pitch is larger than the number of the repetition of the maximum pitch when the tire is designed, attaching weight to a hard terrain.

An embodiment of the present invention will now be described in detail in conjunction with the accompanying drawings, in which:
Fig.1 is a cross sectional view of a pneumatic tire according to the present invention, taken along line A-A in Fig.2; and
Fig.2 shows an example of the tread pattern thereof developed into a plane.

In the drawings, an off-road tire according to the present invention is a pneumatic tire 1 for motocross bikes.

The pneumatic tire 1 comprises a tread portion 2, a pair of sidewall portions 3, a pair of axially spaced bead portions 4 each with a bead core 5 therein, a carcass 6 extending between the bead portions 4 through the tread portion 2 and sidewall portions 3, and a tread reinforcing layer 7 disposed radially outside the carcass 6 in the tread portion 2.

The tread portion 2 is largely curved when compared with the passenger car tires, and the maximum tire section width lies between the tread edges 2e.

The carcass 6 is composed of at least one ply 6A of cords extending between the bead portions 4 and turned up around the bead core 5 in each bead portion 4 from the axially inside to the outside of the tire so as to form a pair of carcass ply turned up portions 6b and a carcass ply main portion 6a therebetween. Preferably, organic fiber cords are used as the carcass cords. In this embodiment, the carcass 6 consists of a single radial ply 6A, namely, the carcass has a radial structure. But, it is also possible to provide a bias structure comprising two cross bias plies 6A.

The tread reinforce cord layer 7 is made of organic fiber cords. In this embodiment, the layer 7 consists of radially inner and outer cross plies 7A and 7B.

According to the present invention, the tread portion 2 is provided in a central region Cr with central blocks 9C to form a block-based tread pattern.

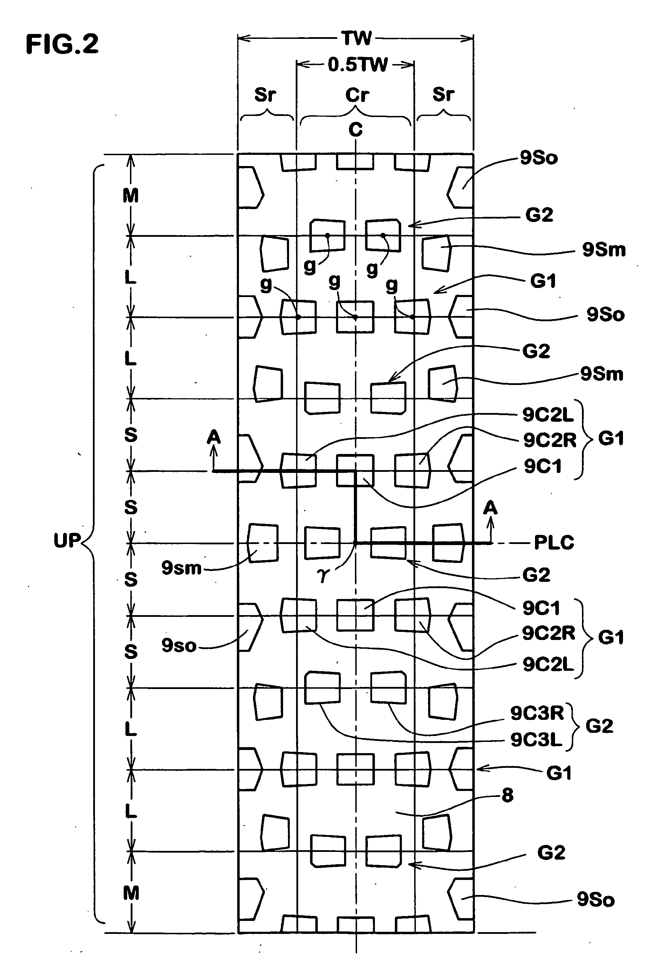

Fig.2 shows the tread pattern developed into a plane. In the developed tread pattern, the tread central region Cr is defined as a region centered on the tire equator C and having 50 % of the developed tread width TW. Incidentally, the developed tread width TW corresponds to the width measured along the curved tread face line 2A from one of the tread edges 2e to the other under the normally inflated unloaded state of the tire. The above-mentioned central blocks 9C are each defined as a block whose top face has a centroid (g) within the tread central region Cr. Further, the undermentioned shoulder blocks 9S are each defined as a block whose top face has a centroid (g) outside the tread central region Cr, in other words, within a tread shoulder region Sr which is a 25 % width region on either side of the central region Cr.

Here, the normally inflated unloaded condition is such that the tire is mounted on a standard wheel rim and inflate to a standard pressure but loaded with no tire load. The standard wheel rim is a wheel rim officially approved for the tire by standard organization, i.e. JATMA (Japan and Asia), T&RA (North America), ETRTO (Europe), STRO (Scandinavia) and the like. The standard pressure is the maximum air pressure for the tire specified by the same organization in the Air-pressure/Maximum-load Table or similar list. For example, the standard wheel rim is the "standard rim" specified in JATMA, the "Measuring Rim" in ETRTO, the "Design Rim" in TRA or the like. The standard pressure is the "maximum air pressure" in JATMA, the "Inflation Pressure" in ETRTO, the maximum pressure given in the "Tire Load Limits at various cold Inflation Pressures" table in TRA or the like. In case of passenger car tires, however, the standard pressure is uniformly defined as 180 kPa.

In this embodiment, the tread portion 2 is provided with the central blocks 9c and shoulder blocks 9s only (hereinafter, generically the "blocks 9"). Therefore, a block-type tread pattern is formed.

The blocks 9 define a land area. The voids (grooves, sea) between the blocks define a sea area. The sum of the land area and sea area is the overall tread area. The tread pattern has a specific overall land ratio (=land area/overall tread area, namely, well known "positive ratio").
If the overall land ratio is too small, tractional force on hard and middle terrains becomes decreased. If too large, tractional force on soft terrain is decreased.
Therefore, the overall land ratio is set in a range of not less than 15 %, preferably not less than 17 %, more preferably not less than 18 %, but not more than 30 %, preferably not more than 28 %, more preferably not more than 26 %.

If the height BH of the block 9 is too low, it becomes difficult to obtain a sufficient tractional force and braking force in rough terrain. If too high, the base portion of the block 9 is very liable to be subjected to a large bending moment, and as a result, the durability of the block 9 rapidly decreases during racing. Therefore, the radial height BH of the block 9 from the deepest part of the sea is preferably not less than 10.0 mm, more preferably not less than 11.0 mm, but not more than 19.0 mm, more preferably not more than 18.0 mm.

The central blocks 9c are arranged in a large number of axial rows which row extends in the tire axial direction.
In each axial row, two or more central blocks 9C are included. The axial rows are arranged circumferentially of the tire at plural kinds of pitches having different pitch lengths and in a specific sequence as explained below.

In this embodiment, the central blocks 9C include: first central blocks 9c1 each having a centroid (g) on the tire equator c; and a pair of second central blocks 9C2L and 9c2R which are disposed one on each side of each of the first central blocks 9C1 so that the centroids (g) of the second central blocks 9C2L and 9c2R and the centroid (g) of the first central block 9C1 are aligned in line in the tire axial direction. Thus, three central blocks 9c1, 9c2L and 9c2R constitute one axial row (hereinafter, the "first axial row G1").

Further, the central blocks 9C include: a pair of third central blocks 9c3L and 9c3R which are disposed one on each side of the tire equator C so that the centroids (g) thereof are aligned in axial line at a circumferential position between the circumferentially adjacent first central blocks 9c1. Thus, two central blocks 9c3L and 9C3R constitute another axial row (hereinafter, the "second axial row G2").

The first axial rows G1 and second axial rows G2 are arranged one after the other in the tire circumferential direction.

In this embodiment, the shoulder blocks 9S include: outermost blocks 9So at the tread edges 2e; and middle blocks 9Sm midway between the tread edges 2e and the edges of the central region Cr. The outermost blocks 9So and middle blocks 9Sm are arranged one after the other in the tire circumferential direction. As shown in Fig.2, most of the outermost blocks 9So are almost aligned with the first axial row G1, and the middle blocks 9Sm are almost aligned with the second axial row G2. As a result, broad groove area 8 continuously extending across the entire tread width is formed between the axial rows G1 and G2.

The blocks 9c and 9S form the tread pattern. In this example, the entire tread pattern is formed by repetitively and circumferentially arranging a unit pattern UP. An example of one unit pattern UP is shown in Fig.2.

If the number of unit patterns UP which make up the entire tread pattern is small, the arrangement of the blocks may have a large number of variations, and as a result, the adaptability to various road surfaces may be increased. But, there is a possibility that the traction is decreased on a certain road surface. Contrary, if the number of the unit patterns UP is large, as the variations of the block arrangement becomes decreased, the adaptability to road surfaces is decreased. From these viewpoints, the number of unit patterns UP is not less than 2 (repetition is at least once), preferably not less than 3 (repetitions are at least twice), more preferably not less than 4, but not more than 7, preferably not more than 6, more preferably not more than 5.

The unit pattern UP includes the above-mentioned axial rows G1 and G2. If the number of pitches included in one unit pattern UP is less than 3, as the variations of the block arrangement becomes decreased, the adaptability to various road surfaces is decreased. If more than 20, the arrangement of the blocks may have a large number of variations, and as a result, the adaptability to various road surfaces may be increased. But, there is a possibility that the traction is decreased on a certain road surface. Therefore, the number is not less than 3, preferably not less than 4, more preferably not less than 6, but not more than 20, preferably not more than 16, more preferably not more than 12.

If the total number of all the axial rows G1 and G2 around the tire circumference (namely, the number of the unit patterns X the number of the axial rows in a unit pattern) is more than 42, then it becomes difficult to provide the tire with the basic ability to run through rough terrain. If the total number is less than 30, then it becomes difficult to obtain a good traction on muddy soft terrain. Therefore, the total number is not less than 30, preferably not less than 33, but not more than 42, preferably not more than 40.

In the unit pattern UP, the axial rows G1 and G2 are arranged at three or more different pitches. In Fig.2, there are three different pitches L, M and S (in descending order) having three pitch lengths. Here, the pitch length means the circumferential length of the pitch measured at the tire equator.

If the number of different pitches in a unit pattern UP is too large, it becomes difficult to obtain big traction on various road surfaces. The same applies to the case that the axial rows G1 and G2 are arranged at the same pitches. Therefore, the number of different pitches is preferably not less than 3, but preferably not more than 6, more preferably not more than 5, still more preferably 4.

If the pitch length is less than 30 mm, it becomes difficult to obtain minimal ability to run through rough terrain. If more than 60 mm, it is highly likely that a good traction performance is limited to only specific muddy soft terrain. Therefore, each pitch length is not less than 30 mm, preferably not less than 35 mm, but not more than 60 mm, preferably not more than 50 mm.

Preferably, the pitch ratio of the maximum pitch to the minimum pitch (namely, pitch length L/pitch length S) is set in a range of not less than 105 %, more preferably not less than 107 %, still more preferably not less than 109 %, but not more than 130 %, more preferably not more than 125 %, still more preferably not more than 120 %.

If the Max./Min. pitch ratio is more than 130 %, the variation of the pattern rigidity becomes increased, and also the variation of the tractional force increases in the tire circumferential direction. If the Max./Min. pitch ratio is less than 105 %, the primary object of the invention, namely, the adaptability to various road surfaces can not be obtained.

For the similar reasons, the pitch ratio between closest pitches, in other words, the pitch ratio between a pitch length and a next longer pitch length is preferably not less than 105 %, but not more than 110 %. In this embodiment, the pitch ratio (L/M) and the pitch ratio (M/S) are 105 to 110 %.

The sequence of the different pitches (L, M and S) is such that every kind of pitch (L or M or S) is repeated at least once. In the example shown in Fig.2, the local sequence in the unit pattern UP is (MLLSSSSLLM). Therefore, In the case of the tire where the unit pattern UP is repeated thrice, the overall sequence is (MLLSSSSLLM) x 4, namely,
(MLLSSSSLLMMLLSSSSLLMMLLSSSSLLMMLLSSSSLLM).

As a result, the adaptability to hard, middle and soft terrains can be further improved. More specifically, the parts "SSSS" where the blocks 9 are close-set are formed at regular pitch angles (in this example, 90 degrees) around the tire. As a result, the number of blocks' edges which can engage with the road surface increases, and further, the number and the total ground contacting area of the blocks increase. Therefore, the tractional force and braking force, namely, road grip in the hard terrain can be secured. In the parts "LL" where the blocks 9 are relatively sparse, the blocks can dig into soft terrain. Therefore, the road grip in the soft terrain can be secured. Similarly, the parts "MM" can secure the road grip in the middle terrain.

In the unit pattern UP in this embodiment, there exist an even number of pitches or axial rows. In Fig.2, ten pitches and ten axial rows exist. And the unit pattern UP is line symmetric about the center line PLC in the circumferential direction. In other words, the pitch arrangement is symmetric about the line PLC. More specifically, a local sequence from the center line PLC to one of the circumferential ends is SSLLM, and a local sequence from the center line PLC to the other circumferential end is also SSLLM. By such arrangement, the traction during straight running may be effectively increased.

In order to attach weight to the improvement on the hard terrain, the number of repetition of the minimum pitch s is larger than the number of repetition of the maximum pitch L.

As to the shape of the central block 9 at the top, the block has a substantially rectangular shape although the shapes of the second and third central blocks 9c2L, 9C2R, 9C3L and 9C3R appear as a trapezoid in Fig.2 due to the transformation by the development of the largely curved tread face.

Further, in this embodiment, all the second central blocks 9c2R are disposed at one axial position. All the second central blocks 9C2L are disposed at one axial position.
As to the axial distance between the paired central blocks 9C3R and 9C3L in each axial row G2, the axial distance in the axial row G2 positioned between the maximum pitch L and minimum pitch S is larger than the axial distance in the axial rows G2 positioned between the maximum pitch L and medium pitch M. Furthermore, at transitional points from the maximum pitch L to other pitches M and S, the middle shoulder blocks 9Sm are circumferentially shifted towards the maximum pitch L, accompanied by the outermost shoulder blocks 9So on other pitch (M, S) side. Here, the position of the block means the position of the centroid.

At any rate, in the case of motorcycle tires, the tread pattern is line symmetric about the tire equator C in terms of the shapes of the blocks 9 and the arrangement or positions of the blocks 9.

### Comparison Tests

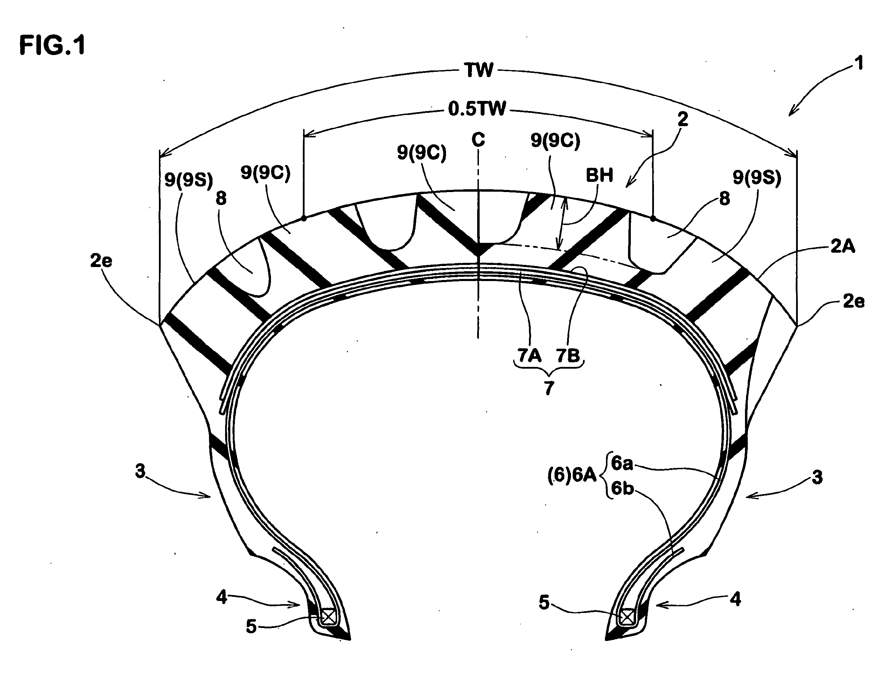

off-road tires of size 120/80-19 63M (rim size: 19X2.15) having a basic structure shown in Figs.1 and 2 were produced and tested for the traction performance.

In the traction performance test, 450cc motocross bikes provided on the rear wheels with the test tires were used. As to the front wheels, all the bikes were provided with same tires of size 90/100-21 57M (rim size: 21x1.60). The front tire pressure and rear tire pressure were 80 kPa.
In hard, middle and soft terrains, the reaction force of the road surface to the driving force of the tire was evaluated by ten professional motocross riders, using a 100 point scoring system, and the average point of the ten ridres was obtained with respect to each tire. The results are indicated in Table 1. The higher the point, the better the traction performance.

**Table 1**

| Tire | Ref.1 | Ref.2 | Ref.3 | Ex.1 | Ex.2 | Ex.3 | Ex.4 | Ref.4 | Ex.5 |
|---|---|---|---|---|---|---|---|---|---|
| Number of unit | 5 | 4 | 4 | 4 | 4 | 4 | 5 | 4 | 4 |
| Number of pitches in a unit | 8 | 10 | 9 | 10 | 10 | 10 | 8 | 8 | 8 |
| Total number of pitches | 40 | 40 | 36 | 40 | 40 | 40 | 40 | 32 | 32 |
| Number of different pitches | 1 | 3 | 2 | 4 | 3 | 1 | 3 | | |
| Land ratio (%) | 25 | 24 | 21 | 24 | 24 | 24 | 24 | 18 | 18 |
| Max./Min. pitch ratio (%) | 100 | 109 | 106 | 104 | 104 | 100 | 109 | | |
| Ratio between closest pitches | 100 | 100 | 100 | 103 | 103 | 102 | 102 | 100 | 103 |
| Traction performance | | | | | | | | | |
| on hard terrain | 100 | 100 | 80 | 110 | 100 | 100 | 100 | 50 | 60 |
| on middle terrain | 80 | 80 | 100 | 100 | 90 | 80 | 100 | 70 | 100 |
| on soft terrain | 50 | 50 | 70 | 60 | 50 | 50 | 50 | 100 | 110 |

From the test results, it was confirmed that the traction performance on hard, middle and soft terrains can be improved, and the adaptability to various running conditions is increased.

As has been explained, the present invention is suitably applied to pneumatic tires for motocross bikes. But, it is also possible to apply to pneumatic tires for four-wheel or three-wheel vehicles such as buggy cars. In this case, aside from line symmetric, the tread pattern may be symmetric about a point (gamma) on the tire equator C.

## Claims

1. An off-road tire (1) comprising a tread portion (2) provided with a plurality of axial rows (G1, G2), wherein
said plurality of axial rows each includes at least two central blocks (9C) whose centroids (g) are substantially aligned in line in the tire axial direction, and the axial rows (G1, G2) are arranged circumferentially of the tire at three or more different pitches (S, L, M) in a sequence,
said sequence is such that a unit (UP) is repeated at least once successively, whereby the sequence is made up of at least two successive units (UP), wherein the unit is made up of said three or more different pitches (S, L, M) of which total number is in a range of from 3 to 20,
said three or more different pitches include a minimum pitch (S) and a maximum pitch (L) which is 105 to 130 % of the minimum pitch, and
in the sequence, each of said three or more different pitches (S, L, M) is repeated at least once successively,
**characterized in that**
the number of successive repetitions of the minimum pitch (S) is larger than the number of the successive repetitions of the maximum pitch (L).

2. The tire according to claim 1, wherein
said total number of the pitches in the unit is at least 4.

3. The tire according to claim 1, wherein
said total number of the pitches in the unit is an even number, and
in the unit, a first half thereof has a local pitch sequence, and a last half thereof has a local pitch sequence which is inverse of the first half.

4. The tire according to claim 1, wherein
in every two closest pitches in said different pitches, the larger pitch is 105 to 110 % of the smaller pitch.

5. The tire according to claim 1, wherein
the number of the successive units (UP) around the tire is at most 7.

6. The tire according to claim 1, wherein
the tread portion (2) has a land ratio of from 15 to 30 %.

## Patentansprüche

1. Geländereifen (1), der einen Laufflächenabschnitt (2) umfasst, der mit einer Vielzahl von axialen Reihen (G1, G2) versehen ist, wobei
die Vielzahl von axialen Reihen jeweils zumindest zwei zentrale Blöcke (9C) umfasst, deren Schwerpunkte (g) im Wesentlichen in einer Linie in der axialen Richtung des Reifens ausgerichtet sind, und die axialen Reihen (G1, G2) in Umfangsrichtung des Reifens mit drei oder mehr unterschiedlichen Teilungsabständen (S, L, M) in einer Folge angeordnet sind,
wobei die Folge derart ist, dass eine Einheit (UP) zumindest einmal aufeinanderfolgend wiederholt ist, wodurch die Folge aus zumindest zwei aufeinanderfolgenden Einheiten (UP) gebildet ist, wobei die Einheit aus den drei oder mehr unterschiedlichen Teilungsabständen (S, L, M) gebildet ist, deren Gesamtzahl in einem Bereich von 3 bis 20 liegt,
die drei oder mehr unterschiedlichen Teilungsabstände einen minimalen Teilungsabstand (S) und einen maximalen Teilungsabstand (L), der 105 bis 130 % des minimalen Teilungsabstandes beträgt, umfassen, und
in der Folge ein jeder der drei oder mehr unterschiedlichen Teilungsabstände (S, L, M) zumindest einmal aufeinanderfolgend wiederholt ist,
**dadurch gekennzeichnet, dass**
die Zahl von aufeinander folgenden Wiederholungen des minimalen Teilungsabstandes (S) größer ist als die Anzahl der aufeinanderfolgenden Wiederholungen des maximalen Teilungsabstandes (L).

2. Reifen nach Anspruch 1, wobei
die Gesamtzahl der Teilungsabstände in der Einheit zumindest 4 beträgt.

3. Reifen nach Anspruch 1, wobei
die Gesamtzahl der Teilungsabstände in der Einheit eine gerade Zahl ist, und
in der Einheit eine erste Hälfte davon eine lokale Teilungsabstandsfolge aufweist, und eine letzte Hälfte davon eine lokale Teilungsabstandsfolge aufweist, die umgekehrt zu der ersten Hälfte ist.

4. Reifen nach Anspruch 1, wobei
in jeweils zwei nächstliegenden Teilungsabständen in den unterschiedlichen Teilungsabständen der größere Teilungsabstand 105 bis 110 % des kleineren Teilungsabstandes beträgt.

5. Reifen nach Anspruch 1, wobei
die Zahl der aufeinanderfolgenden Einheiten (UP) um den Reifen herum höchstens 7 beträgt.

6. Reifen nach Anspruch 1, wobei
der Laufflächenabschnitt (2) ein Land-Verhältnis von 15 bis 30 % aufweist.

## Revendications

1. Pneumatique tout-terrains (1) comprenant une portion formant bande de roulement (2) dotée d'une pluralité de rangées axiales (G1, G2), dans lequel
ladite pluralité de rangées axiales incluent chacune au moins deux blocs centraux (9C) dont les centroïdes (g) sont sensiblement alignés en ligne dans la direction axiale du pneumatique, et les rangées axiales (G1, G2) sont agencées circonférentiellement par rapport au pneumatique à raison de trois ou plusieurs pas différents (S, L, M) dans une séquence,
ladite séquence est telle qu'une unité (UP) est répétée au moins une fois successivement, grâce à quoi la séquence est constituée d'au moins deux unités successives (UP), et l'unité est constituée avec lesdits trois ou plusieurs pas différents (S, L, M) dont le nombre total est dans une plage de 3 à 20,
lesdits trois ou plusieurs pas différents incluent un pas minimum (S) et un pas maximum (L) qui est de 105 à 130 % du pas minimum, et
dans la séquence, chacun desdits trois ou plusieurs pas différents (S, L, M) est répété au moins une fois successivement,
**caractérisé en ce que**
le nombre de répétitions successives du pas minimum (S) est supérieur au nombre de répétitions successives du pas maximum (L).

2. Pneumatique selon la revendication 1, dans lequel
ledit nombre total de pas dans l'unité est au moins 4.

3. Pneumatique selon la revendication 1, dans lequel
ledit nombre total de pas dans l'unité est un nombre pair, et dans unité, une première moitié de celle-ci présente une séquence de pas locale, et une autre moitié de celle-ci présente une séquence de pas locale qui est inverse de la première moitié.

4. Pneumatique selon la revendication 1, dans lequel
dans deux pas les plus rapprochés desdits différents pas, le pas plus grand est de 105 à 110 % du pas plus petit.

5. Pneumatique selon la revendication 1, dans lequel
le nombre des unités successives (UP) autour du pneumatique est au maximum de 7.

6. Pneumatique selon la revendication 1, dans lequel
la portion formant bande de roulement (2) présente un rapport de portées de 15 à 30 %.
